# EUROPEAN PATENT APPLICATION

(11) **EP 1 841 242 A2**
(43) Date of publication of application: **03.10.2007**
(21) Application number: 06026969.3
(22) Date of filing: 27.12.2006
(51) Int. Cl.: H04Q 3/00, H04Q 7/32, H04M 3/493, H04M 3/58, H04M 3/56

(54) **Apparatus and method for storing/calling telephone number in mobile terminal**

(30) Priority: 31.03.2006 KR 20060029396
(71) Applicant: Samsung Electronics Co., Ltd., Suwon-si, Gyeonggi-Do (KR)
(72) Inventor: Kim, Dong Sub, Gumi-si Gyeongsangbuk-do (KR); An, Hae Jun, Gumi-si Gyeongsangbuk-do (KR)
(74) Representative: Lang, Johannes

(57) **Abstract**

An apparatus and method for registering a telephone number received by a mobile terminal as the latest number and enabling a new call connection to the latest number during or after a phone call are provided. The method of the call connection includes checking input information (S203) during a phone call between a calling party and a called party, identifying, if the input information is received, the input information and extracting a telephone number (S207) included in the input information, performing, if a call connection is requested (S223) after extracting the telephone number, a tripartite call connection to a mobile terminal corresponding to the extracted telephone number, and performing, if a phone call is terminated after extracting the telephone number, a call connection (S217) to a mobile terminal corresponding to the extracted telephone number.

## Description

### BACKGROUND OF THE INVENTION

### Field of the Invention:

The present invention relates to an apparatus for providing additional services in a mobile terminal, and a method thereof. In particular, the present invention relates to an apparatus for enabling a call connection during or after a phone call by using information generated during the phone call of a mobile terminal, and a method thereof.

### Description of the Prior Art:

With recent development in wireless communication technology, use of mobile terminals has become popular. As a result of popularization of the mobile terminals, communication service companies are currently providing various kinds of service to satisfy telephone subscribers' desire, such as a wireless Internet service, short message service (SMS), and multimedia service including screen images and moving pictures, in addition to a voice communication service without any restriction in terms of time and space.

The mobile terminal has a basic function of performing voice communication with another mobile phone or a wired telephone through a base station while moving in a mobile communication service area, and has additional functions of performing data communication, such as personal information management, and information exchange with a computer and with the Internet. Recently, new mobile terminals appearing at frequent intervals in the market provide a better performance improved by providing transmission/reception of screen images or moving pictures, virtual 3-dimensional stereo sounds, Moving Picture Experts Group (MPEG) audio layer 3 (MP3) player function, and integration of camera for picture-taking.

According to functions, the mobile terminals may be classified into a terminal having an Internet function, terminal having a character transmission function, terminal having a moving picture function, terminal having a user's health check function, and terminal having a game function. Additionally, digital multimedia services, such as a digital television service or video on demand (VOD) service, have been commercialized. Some existing mobile terminals provide a 3-dimensional game function, which is more developed than a game function which uses a simple text, and a messenger function.

As described above, the technology related to the mobile terminals is being developed rapidly, and accordingly the mobile terminals are being miniaturized and provide various additional functions, such as a notepad function, phone book function, multimedia messaging service (MMS), and game function, in addition to their basic function of voice communication.

In the case that a telephone number of a third party informed by a called party's voice during a phone call is to be stored, or in the case that a call connection is required after the phone call by using the informed telephone number, a user must memorize or take a note of the telephone number during the phone call, so that the user can store or call the telephone number after the phone call.

However, in the case that the user has forgotten the telephone number of the third party or has been in a difficult situation to take a note, the user may experience inconvenience in obtaining again the telephone number of the third party. Even in the case that the user has memorized the telephone number of the third party or has taken a note of the telephone number, the user may still experience inconvenience, because the user must input the telephone number of the third party to store in the mobile phone or must dial the telephone number memorized or taken on a note to make a call connection to the third party. That is, even though the user is informed with a telephone number of a third party, a call connection cannot be made immediately with the telephone number, and the user may experience inconvenience, because the telephone number must be input for a call connection or storage by memorizing the telephone number.

Accordingly, there is a need for an improved apparatus and method for enabling an input or reception of a telephone number informed during a phone call, and to enable storage of the input/received telephone number or a call connection to the telephone number in a more convenient way during or after the phone call.

### SUMMARY OF THE INVENTION

An aspect of exemplary embodiments of the present invention is to address at least the above problems and/or disadvantages and to provide at least the advantages described below. Accordingly, an object of the present invention is to provide an apparatus and a method for providing additional functions and improving the operation efficiency of a mobile terminal.

Another object of the present invention is to provide an apparatus and a method for storing a telephone number generated in a mobile terminal during a phone call.

Another object of the present invention is to provide an apparatus and a method for enabling a new call connection to another party having a telephone number during or after a phone call between two parties by using the telephone number received by a mobile terminal during a phone call.

Another object of exemplary embodiments of the present invention is to provide an apparatus and a method for a new call connection during or after a phone call by using a telephone number received by a mobile terminal through a short message service (SMS) during a phone call.

Another object of exemplary embodiments of the present invention is to provide an apparatus and a method for a new call connection during or after a phone call by extracting a telephone number from a dual tone multi-frequency (DTMF) signal received by a mobile terminal during a phone call and by using the extracted telephone number.

In order to achieve the above objects, a call connection method which uses a telephone number input/received by a mobile terminal is provided according to an exemplary embodiment of the present invention. The method comprises checking input information during a phone call between a calling party and a called party, identifying, if the input information is received, the input information and extracting a telephone number included in the input information; performing, if a call connection is requested after extracting the telephone number, a tripartite call connection to a mobile terminal corresponding to the extracted telephone number, and performing, if the phone call is terminated after extracting the telephone number, a call connection to a mobile terminal corresponding to the extracted telephone number.

Another call connection method which uses a telephone number input/received by a mobile terminal is provided according to another exemplary embodiment of the present invention. The method comprises checking input information during a phone call between a calling party and a called party identifying, if the input information is received, the input information and extracting a telephone number included in the input information, performing, if a call connection is requested after extracting the telephone number, a tripartite call connection to a mobile terminal corresponding to the extracted telephone number, and performing, if the phone call is terminated after extracting the telephone number, a call connection to a mobile terminal corresponding to the extracted telephone number.

A call connection apparatus which uses a telephone number input/received by a mobile terminal is provided according to another exemplary embodiment of the present invention. The apparatus comprises a memory for storing application programs for executing a call connection to the latest number during or after a phone call by using input information, and for storing setting information related to the phone call to the latest number, a control unit for controlling a mode setting if a setting change signal is input corresponding to the phone call to the latest number, and for controlling the operation of the mobile terminal if input information corresponding to the call connection to the latest number is generated, and a display unit for displaying an execution or setup menu corresponding to the applications for the call connection to the latest number and for receiving/displaying a mode setting guide message according to the control of the control unit.

Other objects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other objects, features, and advantages of certain exemplary embodiment of the present invention will become more apparent from the following detailed description taken in conjunction with the accompanying drawings, in which:
FIG. 1 is a schematic block diagram illustrating a configuration of a mobile terminal according to an exemplary embodiment of the present invention;
FIGs. 2A and 2B are flow charts illustrating an operation method of calling the latest number during a phone call in a mobile terminal according to an exemplary embodiment of the present invention; and
FIG. 3 is a flow chart illustrating a method of registering the latest number during a phone call and calling the latest number in a mobile terminal according to an exemplary embodiment of the present invention.

Throughout the drawings, the same reference numerals will be understood to refer to the same elements, features, and structures.

### DETAILED DESCRIPTION OF EXEMPLARY EMBODIMENTS

Hereinafter, exemplary embodiments of the present invention are described in detail with reference to the accompanying drawings. Some constructions or processes known in the art will be are omitted for clarity and conciseness. Particular terms can be defined to describe the invention in the best manner. Accordingly, the meaning of specific terms or words used in the specification and the claims should not be limited to the literal or commonly employed sense, but should be construed in accordance with the spirit of the invention. The description of the various embodiments is to be construed as exemplary only and does not describe every possible instance of the invention. Therefore, it should be understood that various changes and modifications of exemplary embodiments of the present invention may be made and equivalents may be substituted for elements thereof at the time of this filing.

An exemplary embodiment of the present invention provides an apparatus for providing additional functions for a user's convenience in a mobile terminal, and a method thereof. For instance, exemplary embodiments of the present invention disclose an apparatus for registering information input/received during a mobile phone call as the latest number, and enabling a new call connection after terminating the phone call by using the information obtained during the phone call, and a method thereof. Additionally, the exemplary embodiments of the present invention provide additional functions, such as a tripartite call service, by using the information obtained during a phone call.

The input/received information comprises a telephone number input by a user for call connection; telephone number received through a short message service (SMS), multimedia messaging service (MMS), and electronic mail; telephone number extracted from a character message received through the SMS; telephone number detected from a dual tone multi-frequency (DTMF) signal; and telephone number extracted by voice recognition.

Exemplary embodiments of the present invention enable call connection by setting up a phone call with a called party, registration of the telephone number of a third party input/received during a phone call as the latest number, and a new call connection to the registered latest number after the phone call. Additionally, a tripartite call service for connecting to a third party is enabled by registering the telephone number of the third party input/received during a phone call as the latest number through a call setup operation, and by connecting to the latest number during the phone call. According to exemplary embodiments of the present invention, a telephone number received from a third party during a phone call with a called party, for example, a caller's telephone number extracted from a character message received through an SMS, may be identified and registered as the latest number.

In this specification, although a mobile terminal is described as an example of a mobile communication terminal for convenience in explanation, the present invention is not limited thereto. The mobile terminal according to the exemplary embodiments of the present invention is a terminal for providing a user's convenience, and preferably comprises all the information and communication equipments, such as a mobile communication terminal, mobile phone, wired/wireless telephone, smart phone, International Mobile Telecommunication 2000 (IMT-2000) terminal, and Universal Mobile Telecommunication Service (UMTS) terminal, and their applications.

Firstly, an example of a mobile terminal configuration functioning according to an exemplary embodiment of the present invention is described hereinafter.

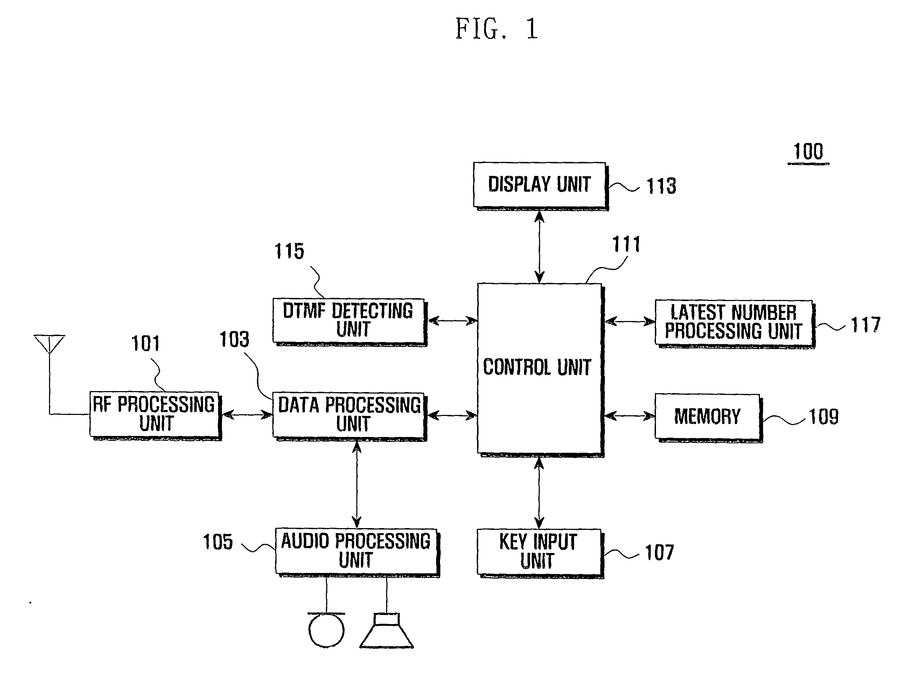

FIG. 1 is a schematic block diagram illustrating a configuration of a mobile terminal according to an exemplary embodiment of the present invention

Referring to FIG. 1, the mobile terminal 100 according to an exemplary embodiment of the present invention preferably comprises a radio frequency (RF) processing unit 101, data processing unit 103, audio processing unit 105, key input unit 107, memory 109, control unit 111, display unit 113, DTMF detecting unit 115, and latest number processing unit 117.

The RF processing unit 101 performs voice communication, SMS and MMS communication, and other types of communications related to data communication. The RF processing unit 101 comprises an RF transmitter for upconverting and amplifying the frequency of a transmitting signal, and an RF receiver for low-noise amplifying and downconverting the frequency of a received signal.

The data processing unit 103 may comprise a means for encoding and modulating a signal transmitted by the RF processing unit 101 and a means for demodulating and decoding a signal received by the RF processing unit 101. Additionally, the data processing unit 103 may comprise a function of extracting a telephone number by voice recognition or extracting a telephone number from a character message transmitted to the mobile terminal 100. For example, the data processing unit 103 may comprise a voice recognition/extraction unit or a character recognition/extraction unit, which may separately be included in the mobile terminal.

The audio processing unit 105 plays an audio signal output by the data processing unit 103 or transmits an audio signal such as a voice input by a microphone to the data processing unit 103.

The key input unit 107 inputs number and character information, and may comprise number keys, character keys, and function keys for setting various functions. The function keys may comprise a volume key, direction keys, and keys mapped corresponding to them.

The memory 109 may comprise a program memory and a data memory. The program memory stores program modules to control general operation of the mobile terminal and application program modules to execute a call function with the latest number after a phone call by using information input during the phone call, such as a telephone number input by a user through the key input unit 107, SMS information received from the other party or from a mobile terminal of a third party, and information detected by the DTMF detecting unit 115.

The data memory stores data generated during the execution of the program modules and setup information related to the calling function with the latest number, and may comprise a database for storing the data individually.

The application program module for executing the call function with the latest number may comprise dedicated applications such as a program module for detecting input information and extracting a telephone number from the input information, a program module for identifying the extracted telephone number as the latest number, a program module for controlling the call operation by using the information identified as the latest number during or after a phone call, and a program module for providing information on the result of the call operation with the latest number.

The control unit 111 controls general operation of the mobile terminal, and controls a mode setting if a mode setting signal for the call function with the latest number is input by the key input unit 107. The control unit 111 controls the operation accordingly if input information on the call function with the latest number is generated by the key input unit 107. Additionally, the control unit 111 controls display of additional functions generated or managed according to the mode setting signal, a user data, or a guide message.

For example, the control unit 111 identifies a telephone number input through the key input unit 107 during a phone call as the latest number, and controls the enablement of a call connection by using the latest number during or after the phone call. Alternatively, if a character message is received from a called party or a third party during the phone call, the control unit 111 detects and extracts a telephone number included in the character message and identifies the telephone number as the latest number, and controls the enablement of a call connection by using the latest number during or after the phone call. Alternatively, the control unit 111 detects a DTMF signal input by a calling party or a called party during a phone call and identifies it as the latest number, and controls a call connection to be enabled by using the latest number during or after the phone call. Alternatively, the control unit 111 detects a telephone number by voice recognition of a calling party's or a called party's voice and identifies it as the latest number, and controls the enablement of a call connection by using the latest number during or after a phone call.

During a phone call with a called party, if information is received from a calling party, a called party, or a third party, the control unit 111 preferably determines activation or deactivation of a call service mode for the latest number, and then controls registration of the latest number or a call connection to the latest number included in the input information, according to the call service mode.

For example, when the call service mode for the latest number is activated, the control unit 111 identifies input information, and, if the input information is data such as a telephone number to be registered as the latest number, provides a guide message to decide whether to register and store the telephone number as the latest number, and registers and stores the latest number according to a response to the guide message.

When the call service mode for the latest number is deactivated, the control unit 111 identifies the input information, and, if the information input during a phone call is a request for an additional function, controls an operation of the additional function.

Although an example of controlling the call operation with the latest number corresponding to input information has been described above, the present invention is not limited thereto. For example, the call operation with the latest number may automatically be performed according to a call service mode setting. That is, the call operation may be performed by identifying a telephone number input by a user or received by the mobile terminal 100 as the latest number, automatically calling the latest number after a phone call, and automatically storing the telephone number after a call connection to the latest number.

The display unit 113 displays an execution or setup menu corresponding to application programs for the call function with the latest number, and displays a mode setting guide message according to the control by the control unit.

The DTMF detecting unit 115 detects a DTMF signal transmitted by a calling party or a called party, interprets the signal, and converts the signal to a telephone number.

The latest number processing unit 117 registers a telephone number input through the key input unit 107, a telephone number detected from a character message received through an SMS communication, and a telephone number detected by the DTMF detecting unit 115, as the latest number.

Referring to the mobile terminal having the above configuration, a method for registering the latest number corresponding to input information and calling the registered latest number is described hereinafter.

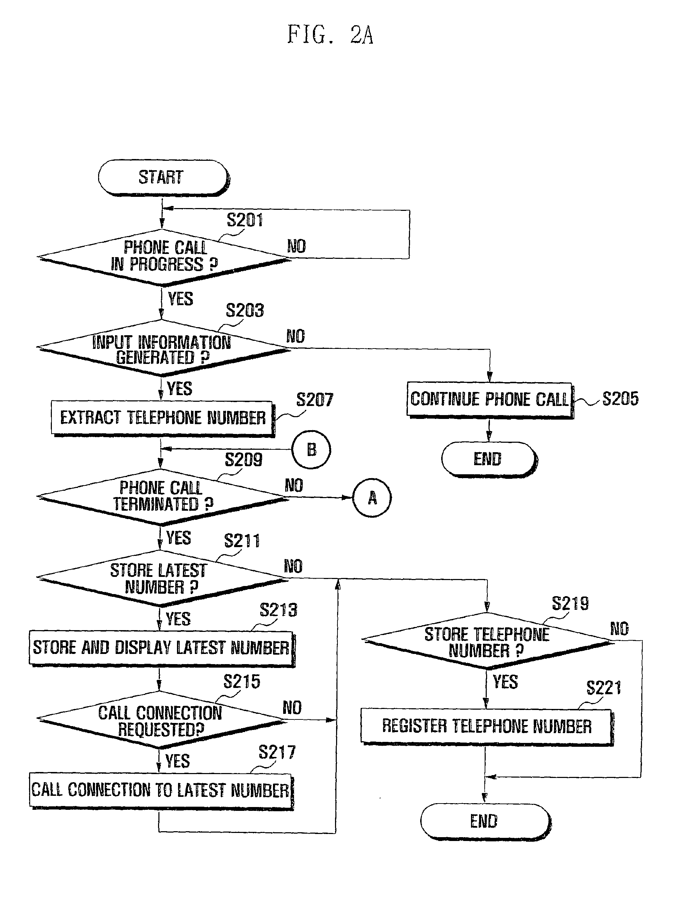

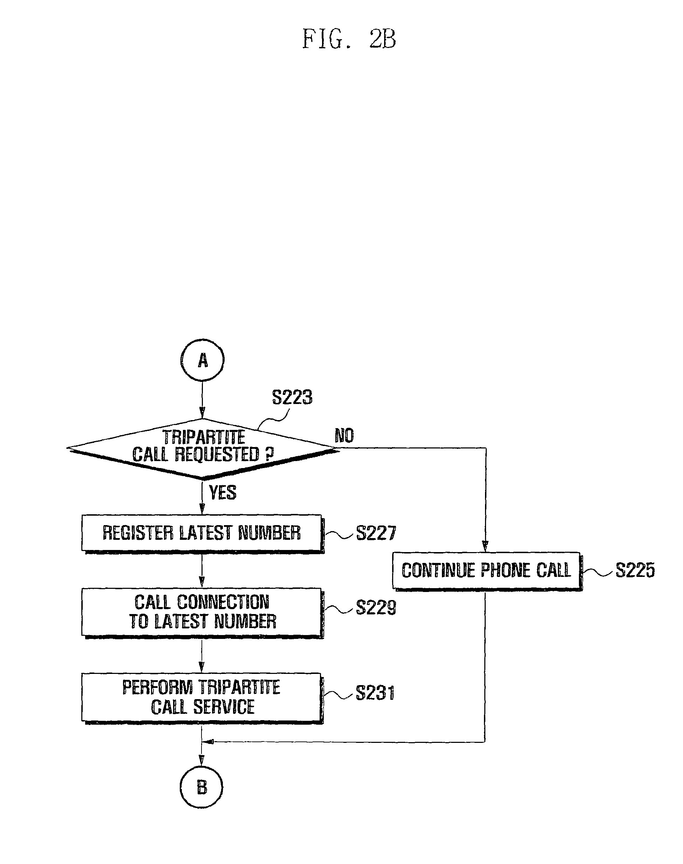

FIGs. 2A and 2B are flow charts illustrating an operation method of a call connection to the latest number during a phone call in a mobile terminal, according to an exemplary embodiment of the present invention.

Referring to FIGs. 2A and 2B, if a phone call is in progress between a calling party and a called party of mobile terminals at step S201, checking is performed to determine whether information is input by a calling or called party, or by another party at step S203. The information may comprise a key input of the calling party's mobile terminal, messages such as an SMS, MMS, or electronic mail received from the called party or a third party, DTMF signal received from the called party or the calling party , or the called party's voice for reciting a telephone number.

If no input information is detected in the checking step S203, the phone call is continued at step S205, and the phone call is terminated after the phone call. If input information is detected in the checking step S203, the input information is identified and a telephone number included in the input information is extracted at step S207. Extracting the telephone number comprises extracting a telephone number from a calling party's key input, extracting a telephone number from a called party's voice reciting the telephone number by using voice recognition, extracting a telephone number from a DTMF signal, extracting a telephone number contained a character message, and extracting the telephone number of a character message sender.

After extracting the telephone number, checking is performed to determine whether the phone call is terminated at step S209. If the phone call is terminated, checking is performed to determine whether the extracted telephone number is to be stored as the latest number at step S211. For example, if the phone call is terminated, a guide message is provided to decide whether the telephone number is to be stored as the latest number, and a corresponding response is awaited.

According to the checking result in step S211, if the telephone number is not stored as the latest number, checking is performed to determine whether the telephone number is to be stored as a conventional telephone number at step S219, and, if a telephone number is to be stored as the conventional telephone number, registration of the conventional telephone number is performed at step S221.

According to the checking result in step S211, if the telephone number is to be stored as the latest number, the telephone number is registered as the latest number and displayed on a screen at step S213. Subsequently, checking is performed to determine whether a call request is issued for the latest number displayed on the screen at step S215, and, if the call request is selected, a call connection is performed at step S217.

If the phone call is not terminated in step S209, checking is performed to determine whether a tripartite call service is requested at step S223. If the tripartite call service is not requested, the existing phone call is continued at step S225. If the tripartite call service is requested in step S223, the telephone number extracted in step S207 is registered as the latest number at step S227 and a call connection to the latest number is performed at step S229. Subsequently, when the call connection to the latest number has been performed, the tripartite call service is provided at step S231.

Although not illustrated in FIGs 2A and 2B, the latest number may temporarily be stored in a mobile terminal's memory for a predetermined period or may be displayed on a screen for a predetermined period. However, the latest number is preferably displayed on the screen for the predetermined period after the phone call is terminated.

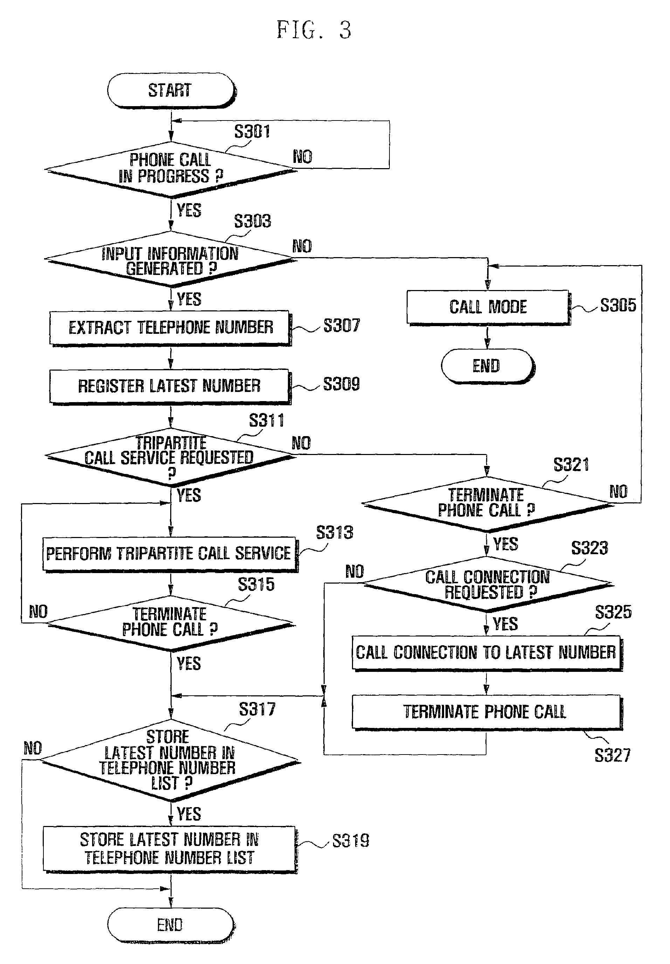

FIG. 3 is a flow chart illustrating a method of registering the latest number during a phone call and calling the latest number in a mobile terminal according to another exemplary embodiment of the present invention.

Referring to FIG. 3, if a phone call is in progress between a calling party and a called party of mobile terminals at step S301, checking is performed to determine whether information is input by a calling or called party, or by another party at step S303.

If no input information is detected in the checking step S303, the phone call is continued at step S305, and the phone call is terminated afterwards. If input information is detected in the checking step S303, the input information is identified and a telephone number included in the input information is extracted at step S307. Extraction the telephone number comprises: extracting a telephone number from a calling party's key input, extracting a telephone number from a called party's voice reciting the telephone number by using voice recognition, extracting a telephone number from a DTMF signal, extraction of a telephone number contained in a character message, and extracting the telephone number of a character message sender.

The extracted telephone number is registered as the latest number at step S309. Subsequently, if a call connection is requested by a user at step 5311, a tripartite call service is provided by connecting to a mobile phone having the corresponding latest number through a call setup at step S313.

After performing the call connection for the tripartite call service at step S313, if the call is terminated at step S315, checking is performed to determine whether the registered latest number is to be stored in a telephone number list at step S317. If storage in the telephone number list is requested, the latest number in the telephone number list is stored according to predetermined storage steps at step S319. For example, if the phone call is terminated, a guide message is displayed on a screen for a user to decide whether the registered latest number is to be stored in the telephone number list, and the storage steps are performed according to a response signal to the guide message, for example, 'yes' or 'no'.

If a tripartite call is not requested by a user at step S311, and if termination of the phone call is not requested at step S321, checking is performed to determine whether a call connection using the latest number is requested at step S323. For example, if the phone call is terminated, the registered latest number is displayed on a screen, and a guide message is displayed for the user to decide whether a call connection is to be performed by using the displayed latest number.

According to the decision in step S323, if a call connection using the latest number is requested, the call connection is performed to a mobile terminal having the corresponding latest number through a call setup at step S325. After the existing phone call is terminated at step S327, the checking at step S317 is performed, and the steps of storing in the telephone number list are performed as described above.

According to the decision in step S323, if a call connection using the latest number is not requested, the checking at step S317 is preferably performed and the steps of storing in the telephone number list are performed as described above.

Although not illustrated in FIGs. 2A, 2B, and 3, according to the exemplary embodiments of the present invention, a step of automatically registering a telephone number generated during a phone call with a called party as the latest number, and a step of automatically performing a call connection by using the latest number after the phone call, may be included. Additionally, a step of automatically storing the latest number in a telephone number list may be included after the call operation using the latest number.

Additionally, a step of transmitting input/received information to a called party's mobile terminal during a phone call may be included, and the called party's mobile terminal receiving the information may operate in the same manner as the above operation method.

As described above, in the exemplary embodiments of the present invention, a telephone number may be input by an input means of a mobile terminal during a phone call with a called party, or may be received from a called party or from a third party, and a new call connection is enabled by registering the input/received telephone number as the latest number.

In the exemplary embodiments of the present invention, the latest number may be stored or transmitted by using a key input, character message, voice signal, and DTMF signal generated during a phone call between a calling party and a called party, and a user may perform a new call connection by using the latest number during or after the phone call.

As described above, an apparatus and a method for storing/calling a telephone number in a mobile terminal according to exemplary embodiments of the present invention have an advantage that a call connection may be more conveniently performed during or after a phone call by registering input/received information, such as a telephone number input by a calling party, a telephone number received from a called party, or a telephone number received from a third party, as the latest number in a state that a call connection is setup between mobile communication terminals. Another advantage is that a call connection to a third party may be performed during a phone call by using the input/received telephone number. Additionally, the input/received information may be transmitted to a called party, and thereby the called party receiving the information may register the latest number and conveniently perform a call connection to a third party. Therefore certain exemplary embodiments of the present invention may provide an improvement of users' convenience.

The invention can also be embodied as computer readable code on a computer readable recording medium. A computer readable recording medium is any data storage device that can store data which can be thereafter read by a computer system. Examples of the computer readable recording medium comprise read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, code, and code segments for accomplishing the present invention can be easily construed by programmers skilled in the art to which the present invention pertains.

Although exemplary embodiments of the present invention have been described in detail hereinabove, it should be understood by those skilled in the art that various changes and modifications in form and details may be made therein without departing the spirit and scope of the present invention as defined by the appended claims and their equivalents.

## Claims

1. A call connection method comprising:
checking input information during a call between a calling party and a called party;
identifying the input information and extracting a telephone number from the input information;
performing, if a call connection is requested after the extracting of the telephone number, a tripartite call connection to a mobile terminal corresponding to the extracted telephone number; and
performing, if the phone call is terminated after the extracting of the telephone number, a call connection to a mobile terminal corresponding to the extracted telephone number.

2. The call connection method of claim 1, wherein the input information comprises at least one of a key input of a mobile terminal of the calling party or the called party, short message received from the called party or a third party, message received through a multimedia messaging service or electronic mail, a voice of the called party corresponding to a telephone number, and a dual tone multi frequency (DTMF) signal received from the third party.

3. The call connection method of claim 1, wherein the extracting of the telephone number comprises at least one of extracting the telephone number from a key input of the calling party or called party corresponding to the type of the input information, extracting the telephone number from a voice of the called party corresponding to the telephone number by using voice recognition, extracting the telephone number by detecting a dual tone multi frequency (DTMF) signal, and extracting the telephone number included in a character message or the telephone number of a character message sender.

4. The call connection method of claim 1, further comprising:
registering the extracted telephone number as the latest number; and
performing a call connection by using the latest number.

5. The call connection method of claim 1, further comprising:
checking, if the call is terminated after the extracting of the telephone number, whether a call connection to the telephone number is requested; and
performing, if the call connection to the telephone number is requested after the extracting of the telephone number, the call connection to the mobile terminal corresponding to the telephone number.

6. The call connection method of claim 1, further comprising storing the telephone number, if the call is terminated after the extracting of the telephone number.

7. The call connection method of claim 1, further comprising:
checking, if the call is terminated after the extracting of the telephone number, whether to store the telephone number; and
storing the telephone number according to result of the checking.

8. The call connection method of claim 1, further comprising:
displaying, if the call is terminated after the extracting of the telephone number, the extracted telephone number and checking whether to perform a call connection to the telephone number;
performing, if the call connection to the telephone number is requested, the call connection to the mobile terminal corresponding to the telephone number; and
storing the telephone number, if the call connection to the telephone number is not requested.

9. A call connection method comprising:
checking input information during a call between a calling party and a called party;
identifying the input information and extracting a telephone number from the input information;
storing the extracted telephone number as the latest number, if the call is terminated after the extracting of the telephone number;
performing a call connection to the latest number corresponding to a request for the call connection; and
registering, if a tripartite call service is requested after the extracting of the telephone number, the extracted telephone number as the latest number and performing the call connection to the latest number.

10. The call connection method of claim 9, wherein the input information comprises at least one of a key input of a mobile terminal of the calling party or the called party, short message received from the called party or a third party, message received through a multimedia messaging service or electronic mail, a voice of the called party corresponding to the telephone number, and a dual tone multi frequency (DTMF) signal received from the called party or the calling party.

11. The call connection method of claim 9, wherein the extracting of the telephone number comprises at least one of extracting the telephone number from a key input of the calling party or called party corresponding to the type of the input information, extracting the telephone number from a voice of the called party corresponding to the telephone number by using voice recognition, extracting the telephone number by detecting a dual tone multi frequency (DTMF) signal, and extracting the telephone number included in a character message or a telephone number of a character message sender.

12. The call connection method of claim 9, further comprising:
deciding, if the call is terminated, whether to store the extracted telephone number as the latest number, and
registering and displaying the telephone number as the latest number corresponding to the decision.

13. The call connection method of claim 9, wherein the latest number comprises the extracted telephone number registered in the mobile terminal for a call connection to a third party during or after the call.

14. A call connection apparatus comprising:
a memory for storing application programs for executing a call connection to the latest number during or after a call by using input information, and
for storing setting information related to the call connection to the latest number;
a control unit for controlling a mode setting if a setting change signal is input corresponding to the call connection to the latest number, and controlling the operation of the mobile terminal if input information corresponding to the call connection to the latest number is generated; and
a display unit for displaying an execution or setup menu corresponding to the application programs for the call connection to the latest number, and
for receiving and displaying a mode setting guide message according to the control of the control unit.

15. The call connection apparatus of claim 14, wherein the input information comprises at least one of a key input of a mobile terminal of the calling party or the called party, short message received from the called party or a third party, message received through a multimedia messaging service or electronic mail, a voice of the called party corresponding to the telephone number, and a dual tone multi frequency (DTMF) signal received from the called party or the calling party.

16. The call connection apparatus of claim 14, further comprising a data processing unit for extracting a telephone number from a signal input by a calling party or called party by using voice recognition, and for extracting a telephone number from a character message.

17. The call connection apparatus of claim 14, wherein the application program for executing the call function of the latest number comprises a program module for detecting input information and extracting a telephone number from the input information, a program module for identifying the extracted telephone number as the latest number, a program module for controlling the call operation by using the information identified as the latest number during or after a call, and a program module providing information on an operation result corresponding to the call operation of the latest number.

18. The call connection apparatus of claim 14, wherein the control unit extracts a telephone number from a key input of a calling party or called party during the call and registers the telephone number as the latest number, extracts a telephone number from a character message and registers the telephone number as the latest number if the character message is received from the called party or a third party, detects a dual tone multi frequency (DTMF) signal input by the calling party or the called party during a call and registers the signal as the latest number, detects a telephone number from a voice of the calling party or a voice of the called party by using voice recognition and registers the telephone number as the latest number, and controls a call connection to the registered latest number during or after the call.

19. The call connection apparatus of claim 14, further comprising a dual tone multi frequency (DTMF) detecting unit for detecting a DTMF signal transmitted by a calling party or a called party, analyzing the signal, and converting the signal to a telephone number.

20. The call connection apparatus of claim 14, further comprising a latest number processing unit for registering a telephone number extracted from the input information as the latest number in the mobile terminal for a call connection to a third party during or after a call.
